# EUROPEAN PATENT APPLICATION

(11) **EP 3 854 657 A1**
(43) Date of publication of application: **28.07.2021**
(21) Application number: 18934194.4
(22) Date of filing: 20.09.2018
(51) Int. Cl.: B61L 25/02

(54) **WIRELESS COMMUNICATION SYSTEM, BASE STATION, AND WIRELESS COMMUNICATION METHOD**

(71) Applicant: Hitachi Kokusai Electric Inc., Tokyo 105-8039 (JP)
(72) Inventor: SATO, Yosuke, Kodaira-shi, Tokyo 187-8511 (JP)
(74) Representative: J A Kemp LLP
(86) International application number: PCT/JP2018/034740
(87) International publication number: WO 2020/059065

(57) **Abstract**

The wireless communication system comprises: a plurality of ground radio sets 250 installed along a railway that carry out the transmission/reception of a radar signal with a first frequency and the transmission/reception of a communication signal with a second frequency; a vehicle radio set 220 on a train 200 that carries out the transmission/reception of a communication signal with the second frequency; and a switching control device 280 that controls the switching of ground radio sets 250 that are to communicate with the vehicle radio set 220 based on the reception level of the radar signal. Furthermore, the configuration allows the ground radio sets 250 that are not communicating with the vehicle radio set 220 to transmit a radar signal, and allows the ground radio set 250 that has started communicating with the vehicle radio set 220 to transmit a radar signal and a communication signal.

## Description

### TECHNICAL FIELD

The present invention relates to a wireless communication system for carrying out wireless communication with a moving body that moves on a predetermined route.

### BACKGROUND ART

Moving bodies that run along a predetermined route include automobiles that run on a road and trains that run on a track. In terms of wireless communication with such a moving body, one example of a technology for implementing wireless communication with a train that is running on a track is ground-to-vehicle communication by means of a leaky coaxial cable. In this communication system, slits are provided at constant intervals around the outer periphery of a coaxial cable that is arranged along the railway, which is a route along which trains run, so that an electric wave that has leaked from a slit is received on the vehicle side so as to be used for communication. At present, the communication speed in this communication system is approximately several Mbps.

In the case where wireless communication at a higher speed and with a larger capacity is implemented with a moving body, a possible method is the usage of a highfrequency band electric wave such as a microwave or a millimeter wave. In the case where an antenna with high gain is used for a microwave waveband or a millimeter waveband, however, the area where communication is possible is limited to a range in approximately a line shape because the radiation pattern of the antenna is limited to a narrow range.

In order to establish continuous wireless communication with a moving body, it is necessary to arrange a plurality of ground radio sets which target communication with a moving body along the route through which the moving body progresses so that an appropriate ground radio set that communicates with the moving body can be selected and switched from one to another in accordance with how the moving body progresses. In the case where the moving body is a train, a possible method is to allow the information on the location of the moving body that has been detected from a track circuit or the like to trigger the selection of or the switching to an appropriate ground radio set for the communication with a vehicle radio set equipped in the moving body. However, this method is exclusively applicable only in the case where the information on the location of a moving body can be used as a switching signal. In the case where it is impossible to use the information on the location of a moving body, it is necessary to switch ground radio sets in accordance with any other method.

Method for uniquely detecting information on the location of a moving body include a method for sending out a radar signal from a ground radio set. Patent Literature 1 discloses an example of a wireless communication method for measuring the distance to a vehicle and the moving velocity of the vehicle by analyzing the reflected wave of the radar signal that has been transmitted towards the vehicle from a ground radio set installed along a station platform, and for switching the radar operation to a data transmission operation in the case where the stoppage of a train has been detected. In accordance with this method, the data transmission operation cannot be carried out during the radar operation, and therefore, this method cannot be applied to wireless communication with a train that is moving.

### PRIOR ART LITERATURE

### PATENT LITERATURE

Patent Literature 1: WO 2015/177871

### SUMMARY OF THE INVENTION

### PROBLEMS TO BE SOLVED

The present invention is provided in view of the above-described conventional situation, and an object thereof is to provide a wireless communication system where it is possible to efficiently implement wireless communication with a moving body.

### SOLUTION TO PROBLEMS

In order to achieve the above-described object, the present invention provides a wireless communication system having the following configuration.

That is to say, a wireless communication system for carrying out wireless communication with a moving body that runs along a predetermined route is provided with: a plurality of base stations installed along the route that carry out transmission/reception of a radar signal with a first frequency and transmission/reception of a communication signal with a second frequency which is different from the first frequency; a mobile station that is equipped in the moving body and carries out transmission/reception of a communication signal with the second frequency; and a switching control device that controls the switching of base stations that are to communicate with the mobile station on the basis of the reception levels of a radar signal in the plurality of base stations, wherein a base station that is not communicating with the mobile station transmits a radar signal while not transmitting a communication signal, whereas a base station that has started communicating with the mobile station transmits a radar signal and a communication signal at the same time.

In one example of the configuration, the switching control device may switch the base stations that communicate with the mobile station from a first base station to a second base station that is next to the first base station on the downstream side relative to the direction in which the moving body progresses upon the selection of the second base station as a new base station that is to communicate with the mobile station in the case where the reception level of the radar signal from the second base station exceeds a predetermined threshold value.

Alternatively, in another example of the configuration, the switching control device may switch the base stations that communicate with the mobile station from a first base station to a second base station that is next to the first base station on the downstream side relative to the direction in which the moving body progresses upon the selection of the second base station as a new base station that is to communicate with the mobile station in the case where the reception level of the radar signal from the second base station exceeds the reception level of the radar signal from the first base station.

Here, it is preferable for each of the plurality of base stations to have one or more antenna which are used for the transmission/reception of a radar signal and a communication signal, where the antennas are directed towards the upstream side relative to the direction in which the moving body progresses as viewed from the base stations.

In still another example of the configuration, each of the plurality of base stations may have a first antenna that is used for the transmission of a radar signal and the transmission/reception of a communication signal, and a second antenna that is used for the reception of a radar signal.

Alternatively, in yet another example of the configuration, each of the plurality of base stations may have a first antenna that is used for the transmission of a radar signal and the transmission of a communication signal, a second antenna that is used for the reception of a radar signal, and a third antenna that is used for the reception of a communication signal.

In this case, it is preferable for the second antenna to be set in the same direction of polarization as that in which the first antenna is set, and for the third antenna to be set in the direction of polarization that is rotated by 90 degrees from the direction of polarization in which the first antenna is set.

### ADVANTAGEOUS EFFECTS OF THE INVENTION

The present invention can provide a wireless communication system where it is possible to efficiently implement wireless communication vis-a-vis a moving body.

### BRIEF DESCRIPTION OF DRAWINGS

FIG. 1 is a diagram illustrating a problem with a conventional wireless communication system;
FIG. 2 is another diagram illustrating the problem with the conventional wireless communication system;
FIG. 3 is a diagram illustrating the wireless communication system according to one embodiment of the present invention;
FIG. 4 is a diagram illustrating the switching control of the ground radio sets in the wireless communication system in FIG. 3;
FIG. 5 is a diagram showing the situation of the wireless communication system in FIG. 3 after the ground radio sets have been switched;
FIG. 6 is a diagram showing a first configuration example of the ground wireless sets in the wireless communication system in FIG. 3;
FIG. 7 is a diagram showing a second configuration example of the ground wireless sets in the wireless communication system in FIG. 3;
FIG. 8A is a diagram showing an example of the output from the transmitter during the radar operation;
FIG. 8B is a diagram showing an example of the input into the receiver in the radar reception unit during the radar operation;
FIG. 9A is a diagram showing an example of the output from the transmitter during the radar operation and during the communication operation; and
FIG. 9B is a diagram showing an example of the input into the receiver in the radar reception unit during the radar operation and during the communication operation.

### DESCRIPTION OF EMBODIMENTS

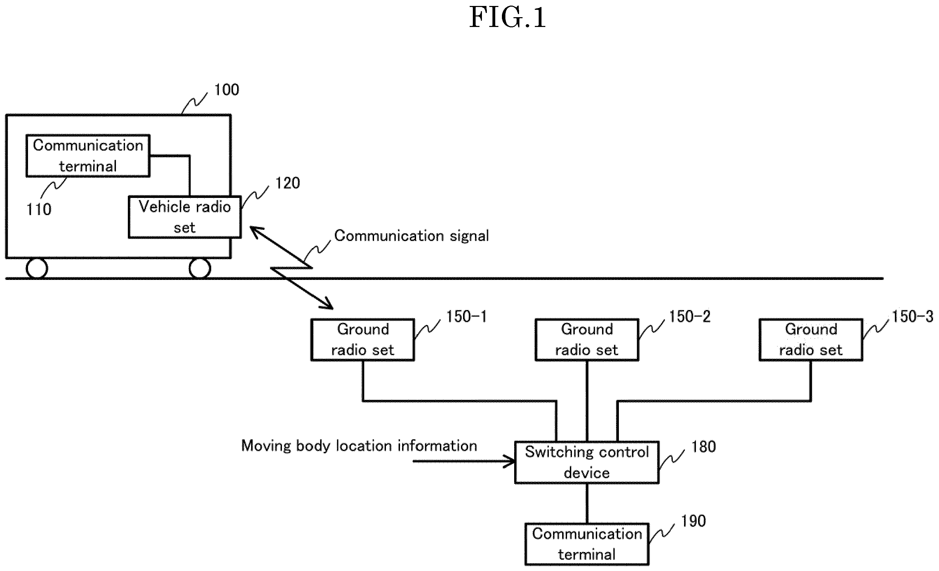

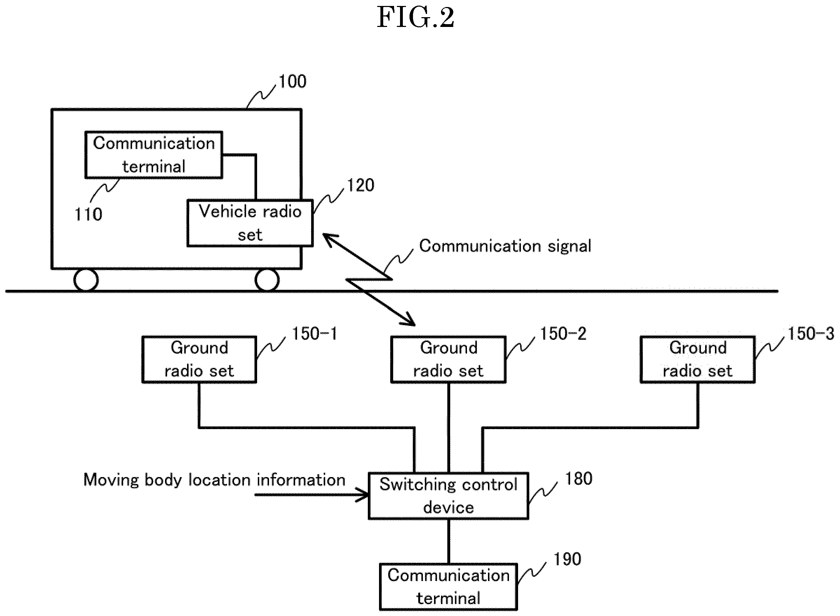

Prior to the description of the wireless communication system according to one embodiment of the present invention, a problem with a conventional wireless communication system is described in reference to FIGS. 1 and 2.

The conventional wireless communication system shown in FIGS. 1 and 2 is provided with: a communication terminal 110 and a vehicle radio set 120 equipped in a train 100, which is a moving body that runs along a railway; a plurality of ground radio sets 150 discretely arranged along the railway; a switching control device 180 for controlling the switching of the ground radio sets 150 that are to communicate with the vehicle radio set 120; and a communication terminal 190 that is connected to the respective ground radio sets 150 via the switching control device 180.

The vehicle radio set 120 is a mobile station that moves as the train 100 progresses. The ground radio sets 150 are base stations that are installed in a fixed manner and communicate with the mobile station (vehicle radio set 120). The communication terminal 110 on the vehicle side and the communication terminal 190 on the ground side can be mutually communicable via wireless communication between the vehicle radio set 120 and any of the ground radio sets 150. In the example shown in the drawings, three ground radio sets 150-1 through 150-3 are denoted as the ground radio sets 150; however, the number of ground radio sets 150 is arbitrary.

The system shown in the drawings is configured in such a manner where the switching control device 180 appropriately switches the ground radio sets 150 that are to communicate with the vehicle radio set 120 in accordance with the movement of the train 100 in order to continuously establish the ground-to-vehicle communication. Here, it is possible to make all the ground radio sets 150 in a transmission state without carrying out the switching; however, there is a possibility of crosstalk in the case where the same frequency is used for the ground radio sets 150 of which the wireless areas overlap. It is also possible to use different frequencies between adjacent ground radio sets 150; however, it is necessary to appropriately switch the frequencies and reconnect the line of communication on the vehicle radio set 120 side, which cannot secure the continuity of the communication. In addition, it is necessary to constantly send out a communication signal from the ground radio sets even in the case where it is clear that the vehicle radio set 100 to communicate with is not present, which leads to an increase in the power consumption.

A possible measure against these is a method for switching the ground radio sets 150 so as to select the optimal one for the communication with the vehicle radio set 120 that is equipped in the moving body by using the information on the location of the moving body that has been detected from a track circuit or the like as the trigger in the case where the moving body is a train. FIG. 1 shows the situation of the case where it has been determined to be appropriate to switch the ground radio set to the ground radio set 150-1 on the basis of the information on the location of the moving body. FIG. 2 shows the situation of the case where it has been determined to be appropriate to switch the ground radio set to the ground radio set 150-2 on the basis of the information on the location of the moving body when the train 100 has progressed after the time in FIG. 1.

The above-described method is applicable only in the case where the information on the location of the moving body can be used as a switching signal, and therefore, it is necessary to switch the ground radio sets in accordance with any other method in the case where it is impossible to use the information on the location of the moving body.

Therefore, according to the present invention, a radar signal is sent out from the ground radio sets separately from the communication signal so that the location of the moving body can be specified without using the information on the location of the moving body.

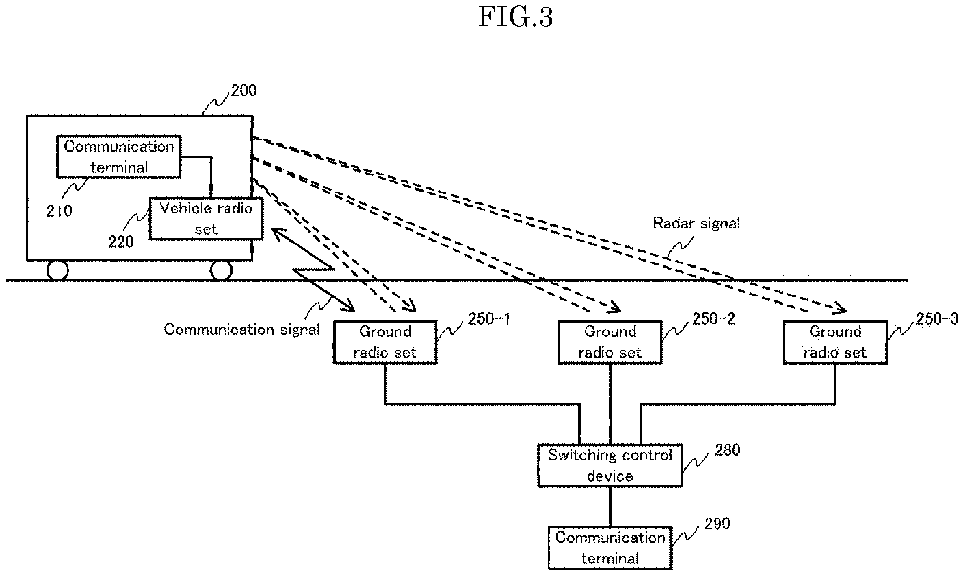

In the following, the wireless communication system according to one embodiment of the present invention is described in reference to FIGS. 3 through 9B. First, the schematic configuration of the wireless communication system according to one embodiment of the present invention is described in reference to FIG. 3.

The wireless communication system in the present example is provided with: a communication terminal 210 and a vehicle radio set 220 that are equipped in a train 200, which is a moving body that runs along a railway; a plurality of ground radio sets 250 that are discretely arranged along the railway; a switching control device 280 for controlling the switching of the ground radio sets 250 that are to communicate with the vehicle radio set 220; and a communication terminal 290 that is connected to the respective ground radio sets 250 via the switching control device 280.

The vehicle radio set 220 is a mobile station that moves as the train 200 progresses, and the ground radio sets 250 are base stations that are installed in a fixed manner and communicate with the mobile station (vehicle radio set 220). The communication terminal 210 on the vehicle side and the communication terminal 290 on the ground side can be mutually communicable via wireless communication between the vehicle radio set 220 and any of the ground radio sets 250. In the example shown in the drawings, three ground radio sets 250-1 through 250-3 are denoted as the ground radio sets 250; however, the number of ground radio sets 250 is arbitrary.

The ground radio sets 250 are configured so that not only the transmission/reception of a communication signal, but also the transmission/reception of a radar signal can be carried out. A frequency that is different from the frequency for the communication signal is used for the radar signal. The ground radio sets 250 have one or more antennas that are used for the transmission/reception of a radar signal and a communication signal, and each antenna is directed towards the upstream side relative to the direction in which the train 200 progresses as viewed from the ground radio sets 250. The ground radio sets 250 include those for the train 200 that progresses along the railway in the first direction (in the direction towards Tokyo, for example) and those for the train 200 that progresses in the second direction that is opposite the first direction (in the direction from Tokyo, for example). The ground radio sets 250 for the train 200 that progresses in the first direction and the ground radio sets 250 for the train 200 that progresses in the second direction have antennas that are directed in the directions opposite each other. Here, one ground radio set 250 may be provided with an antenna for the train progressing in the first direction and an antenna for the train progressing in the second direction so that one ground radio set 250 can deal with the train that progresses in either direction, the first direction or the second direction.

The frequencies that are used for communication between the vehicle radio set 220 and the ground radio sets 250 differ depending on the direction in which the train 200 progresses; however, the used frequencies are shared throughout the entire system. That is to say, all the ground radio sets 250 within the system use the same frequency for the communication with the vehicle radio set 220. Accordingly, the vehicle radio set 220 can continue communication with a ground radio set 250 even when the ground radio set 250 that communicates with the vehicle radio set 220 is switched as the train 200 progresses.

In the present example, the same frequency is used also for the radar signal transmitted from the ground radio sets 250 throughout the entire system. Taking the directionality of the frequency (90 GHz band, for example) used for the radar into consideration, no interference occurs even when the same frequency is used depending on the locations in which the ground radio sets 250 are installed. Here, the frequency of the radio signal may be made different between adjacent ground radio sets 250 so that the possibility of interference can further be reduced (ground radio sets that send out a radar signal with a frequency f1 and ground radio sets that send out a radar signal with a frequency f2 are arranged alternately, for example). In the case where the frequency for the radar signal is made different, the band for the radar signal may be divided into a plural number for use.

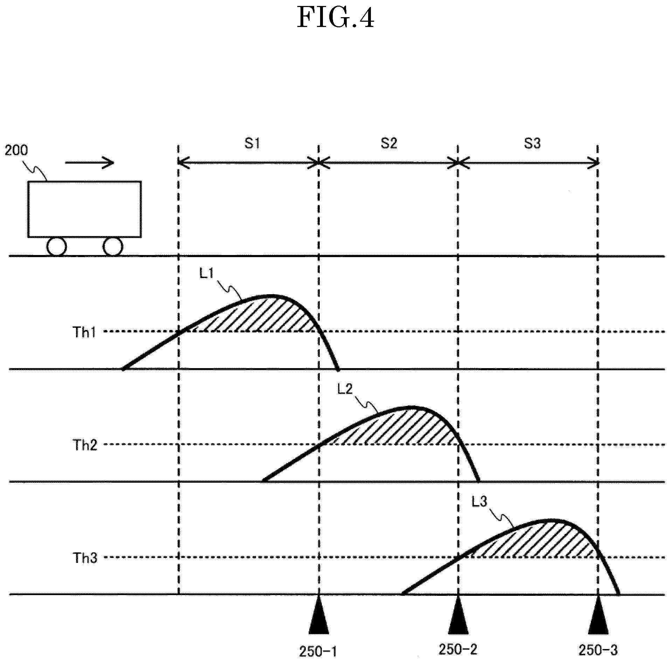

The radar signal that has been transmitted from a ground radio set 250 is reflected from the train 200 (mainly from the front portion of the train) that approaches the ground radio set 250 so as to be received by the ground radio set 250 that has transmitted the radar signal. The ground radio set 250 measures the reception level of the radar signal (reflected wave) that has been reflected from the train 200 and transmits the data to the switching control device 280. The switching control device 280 controls the switching of the ground radio set 250 that is to communicate with the vehicle radio set 220 on the basis of the reception level of the radar signal that has been measured in each ground radio set 250. In the following, the switching control by the switching control device 280 is described in reference to FIG. 4.

The lateral axis in FIG. 4 represents the locations at which a ground radio set 250 is installed. It is assumed that the train 200 progresses from the left side in FIG. 4 toward the right side. The section S1 where communication with the ground radio set 250-1 is possible is a section having a predetermined range starting from the location of the ground radio set 250-1 to a point on the upstream side (left side in the drawing) in the direction in which the train progresses. The section S2 where communication with the ground radio set 250-2 is possible is a section having a predetermined range starting from the location of the ground radio set 250-2 to a point on the upstream side in the direction in which the train progresses. The section S3 where communication with the ground radio set 250-3 is possible is a section having a predetermined range starting from the location of the ground radio set 250-3 to a point on the upstream side in the direction in which the train progresses. In FIG. 4, the communication sections S1 through S3 are set so as not to overlap with each other; however, general setting allows adjacent communication sections to partially overlap.

FIG. 4 also shows the reception level L1 and the threshold value Th1 of the radar signal received by the ground radio set 250-1, the reception level L2 and the threshold value Th2 of the radar signal received by the ground radio set 250-2, and the reception level L3 and the threshold value Th3 of the radar signal received by the ground radio set 250-3. The ground radio set 250-1 is controlled by the switching control device 280 so as to communicate with the vehicle radio set 220 in the case where the reception level L1 exceeds the threshold value Th1. That is to say, the switching control device 280 controls the ground radio set 250-1 so that the transmission/reception function of the communication signal is turned on. The ground radio sets 250-2 and 250-3 are controlled in the same manner. Here, the threshold values (Th1 through Th3) that are compared with the reception levels (L1 through L3) measured by the respective ground radio sets 250 may be the same value or may be different values depending on the factors such as the performance and the environment of the installation of the ground radio sets 250.

The switching of the ground radio set 250 that is to communicate with the vehicle radio set 220 is described following the order. Here, it is assumed that all of the ground radio sets 250-1 through 250-3 continuously transmit the radar signal. The reception level of the radar signal by each ground radio set 250 gradually increases as the train 200 in which the vehicle radio set 220 is equipped approaches the ground radio set 250. In addition, the reception level decreases after the train 200 has approached the ground radio set 250 to a certain extent because the train 200 gradually moves out from the angle of the antenna at which communication is possible.

First, the reception level L1 increases in the ground radio set 250-1 that is the closest to the train 200. The switching control device 280 compares the reception level L1 of the ground radio set 250-1 with the threshold value Th1 and selects the ground radio set 250-1 as the ground radio set that is to communicate with the vehicle radio set 220 in the case where the reception level L1 exceeds the threshold value Th1, and thus controls the ground radio set 250-1 so that a communication signal is sent out together with the radar signal. In addition, the switching control device 280 controls the ground radio set 250-1 so that the communication signal is also received.

After that, the reception level L2 of the ground radio set 250-2 gradually increases as the train 200 approaches the ground radio set 250-2, and contrarily, the reception level L1 of the ground radio set 250-1 gradually decreases. The switching control device 280 compares the reception level L2 of the ground radio set 250-2 with the threshold value Th2 and selects the ground radio set 250-2 as a new ground radio set that is to communicate with the vehicle radio set 220 in the case where the reception level L2 exceeds the threshold value Th2, and thus controls the ground radio set 250-2 so that a communication signal is sent out and received together with the radar signal. At this time, the reception level L1 of the ground radio set 250-1 lowers the threshold value Th1, and therefore, the switching control device 280 controls the ground radio set 250-1 so that the transmission/reception of the communication signal is stopped.

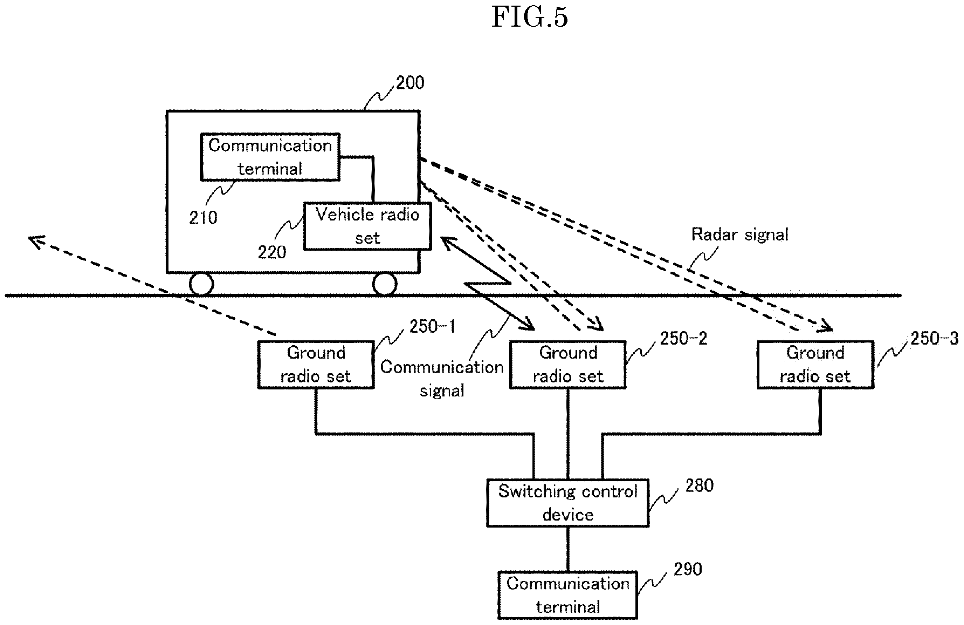

FIG. 5 shows the situation after the ground radio set that communicates with the vehicle radio set 220 has been switched from the ground radio set 250-1 to the ground radio set 250-2. As shown in FIG. 5, the radar signal that has been sent out from the ground radio set 250-1 is not reflected from the train 200 (or is reflected in the direction that is different from the direction toward the ground radio set 250-1) in the case where the train 200 is located out of the angle at which communication is possible with the ground radio set 250-1. At this time, the vehicle radio set 220 establishes communication with the ground radio set 250-2 that is the closest to the train 200.

Likewise, the reception level L3 of the ground radio set 250-3 gradually increases as the train 200 approaches the ground radio set 250-3, and conversely, the reception level L2 of the ground radio set 250-2 gradually decreases. The switching control device 280 compares the reception level L3 of the ground radio set 250-3 with the threshold value Th3 and selects the ground radio set 250-3 as a new ground radio set that is to communicate with the vehicle radio set 220 in the case where the reception level L3 exceeds the threshold value Th3, and thus controls the ground radio set 250-3 so that a communication signal is sent out from the ground radio set 250-3 together with the radar signal. At this time, the reception level L2 of the ground radio set 250-2 lowers the threshold value Th2, and therefore, the switching control device 280 controls the ground radio set 250-2 so that the communication signal is stopped from being sent out.

As described above, the ground radio set 250 that is to communicate with the vehicle radio set 220 is automatically switched as the train 200 progresses.

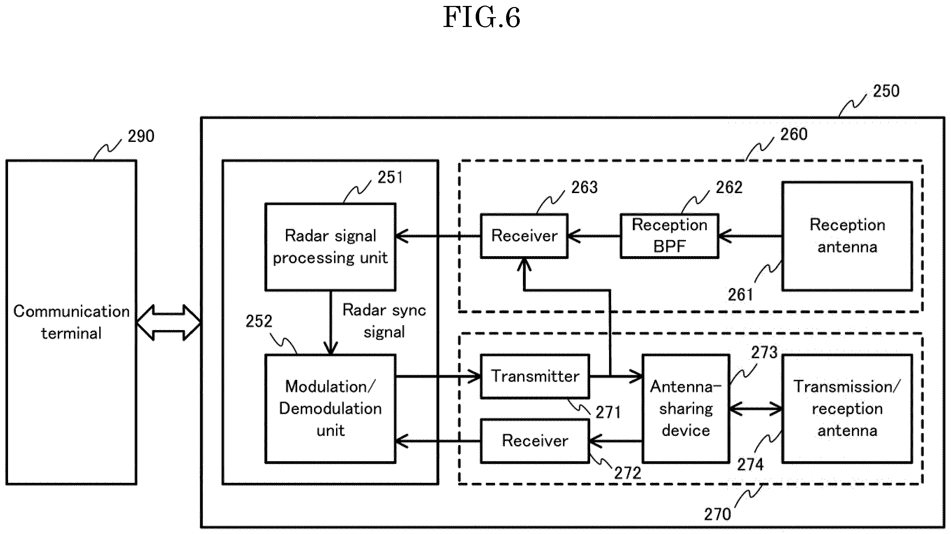

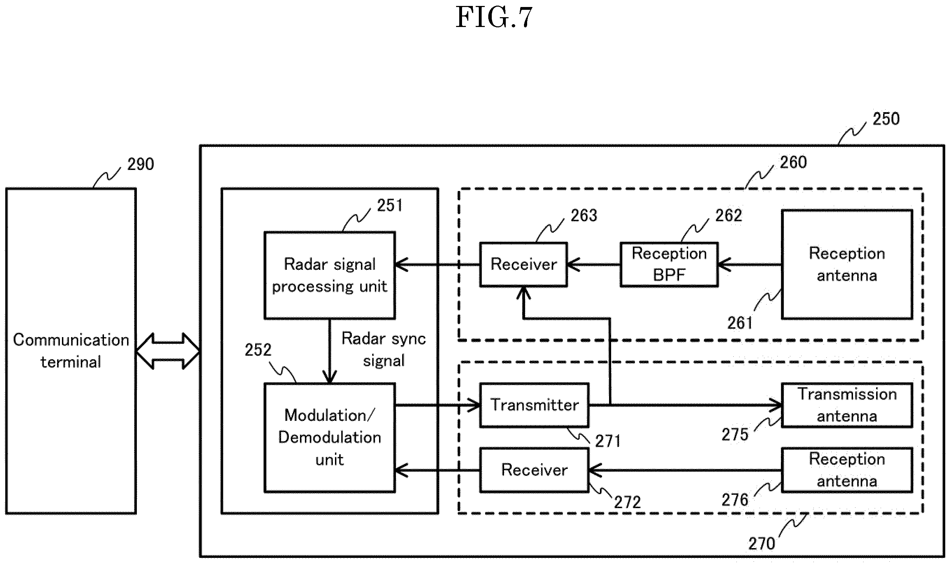

Next, the concrete configuration of the ground radio sets 250 is described in reference to FIGS. 6 and 7.

FIG. 6 shows a first configuration example of a ground radio set 250. The ground radio set 250 in the first configuration example is provided as main functional units with: a radar signal processing unit 251 for processing a radar signal; a modulation/demodulation unit 252 for modulating or demodulating a communication signal; a communication transmission/reception unit 270 for transmitting a radar signal in addition to the transmission and the reception of a communication signal; and a radar reception unit 260 for receiving a radar signal.

The radar signal processing unit 251 carries out such a process as to measure the reception level of the radar signal that has been received by the radar reception unit 260 and transmit the reception level to the switching control device 280.

The modulation/demodulation unit 252 follows the control by the switching control device 280 and carries out such processes as to modulate the communication signal that has been inputted from the communication terminal 290 and transmit the modulated communication signal from the communication transmission/reception unit 270, and as to demodulate the communication signal that has been received by the communication transmission/reception unit 270 and output the demodulated communication signal to the communication terminal 290. In addition, the modulation/demodulation unit 252 follows the control by the radar signal processing unit 251 and carries out such a process as to transmit a radar signal from the communication transmission/reception unit 270.

A radar sync signal for allowing the transmitter 271 to appropriately operate for the radar application is outputted from the radar signal processing unit 251. In the case of FMCW (Frequency Modulated Continuous Wave) radar, for example, it is necessary to carry out a frequency modulation for frequency sweeping with a certain frequency bandwidth Δf on the transmitter 271. In this case, a sync signal for allowing the transmitter 271 to carry out a sweeping operation with the frequency bandwidth Δf is outputted from the radar signal processing unit 251.

In the case of a pulse radar, a transmission wave in pulse form only with a certain time width Δ_{T} is outputted from the transmitter 271. This transmission pulse wave is repeatedly outputted at certain time intervals. In this case, a sync signal for allowing the transmitter 271 to carry out an outputting operation with a time width Δ_{T} and to repeat the output at certain time intervals is outputted from the radar signal processing unit 251.

The communication transmission/reception unit 270 is provided with: a transmitter 271 for carrying out the transmission operation of a communication signal and the transmission operation of a radar signal; a receiver 272 for carrying out the reception operation of a communication signal; a transmission/reception antenna 274 for the transmission/reception of a communication signal and for the transmission of a radar signal; and an antenna-sharing device 273 for connecting the transmitter 271 and the receiver 272 to the transmission/reception antenna 274.

In the case where the antenna-sharing device 273 is used, the transmission frequency and the reception frequency are frequency divided at the time of the transmission operation. Therefore, the transmission frequency transmitted from the antenna-sharing device 273 cannot be received by the same antenna-sharing device 273. Thus, it is necessary to provide a radar reception unit 260 in order to separately carry out the reception of a radar signal.

The radar reception unit 260 is provided with: a reception antenna 261 for receiving a radar signal; a reception BPF (Band-Pass Filter) 262 for sampling a radar signal component by removing the components other than that of the radar signal from the signal received by the reception antenna 261; and a receiver 263 for carrying out the reception operation of a radar signal. The radar signal component that has been outputted from the transmitter 271 in the communication transmission/reception unit 270 is inputted into the receiver 263 in the radar reception unit 260 so as to be used in the reception operation of a radar signal.

The radar signal component that has been outputted from the transmitter 271 in the communication transmission/reception unit 270 is inputted into the receiver 263 in the radar reception unit 260. This radar signal component that has been outputted from the transmitter 271 is used as an LO signal for a built-in frequency mixer in the receiver 263. At this time, this frequency mixer carries out a downward frequency conversion on the radar reception signal that has been outputted from the reception BPF 262 so that the frequency can be treated in the radar signal processing unit in the next stage.

The transmitter 271 in the communication transmission/reception unit 270 is shared as the transmitter for communication and the transmitter for a radar. In order to share the transmitter for communication and for a radar, it is possible to use a method for transmitting a communication signal and a radar signal in a time division manner or a method for transmitting a communication signal and a radar signal in a frequency division manner. In the method for transmitting a communication signal and a radar signal in a time division manner, the communication operation and the radar operation cannot be carried out at the same time, and therefore, it is necessary to stop the communication operation during the radar operation. Conversely, in the method for transmitting a communication signal and a radar signal in a frequency division manner, the communication operation and the radar operation can be carried out at the same time, and therefore, it is not necessary to stop the communication operation during the radar operation. In the present system, it is necessary to continuously carry out a radar operation in order to specify the location of a train 200, and therefore, a method for transmitting a communication signal and a radar signal in a frequency division manner is adopted.

FIG. 7 shows a second configuration example of a ground radio set 250. In the following, the portions that are different from the first configuration example are focused on for the description, and the descriptions about the same portions as in the first configuration example are not repeated.

In the communication transmission/reception unit 270 in a ground radio set 250 in the second configuration example, unlike the first configuration example, the same antenna (274) is not used for both transmission and reception, and separate antennas are provided for the transmission and for the reception. That is to say, the communication transmission/reception unit 270 in the second configuration example is provided with: a transmitter 271 for carrying out the transmission operation of a communication signal and the transmission operation of a radar signal; a receiver 272 for carrying out the reception operation of a communication signal; a transmission antenna 275 for the transmission of a communication signal and for the transmission of a radar signal; and a reception antenna 276 for the reception of a communication signal.

In a configuration where a transmitter and a receiver respectively have a transmission antenna and a reception antenna separately as that in the second configuration example, in general, the reception of a direct wave between these antennas causes an error in the communication. Therefore, the polarization directions of the transmission antenna 275 and the reception antenna 276 are rotated by 90 degrees from each other so as to be perpendicular in order to reduce the reception of a direct wave.

Meanwhile, in the case of the radar operation where a reflected wave is actively used, it is desirable for the polarization direction to be the same between the transmission antenna and the reception antenna. Therefore, the ground radio sets 250 in the second configuration example are provided with a radar reception unit 260 that has a reception antenna 261 where the polarization is 0 degrees relative to the transmission antenna 275 (that is to say, the polarization direction is the same) in addition to the reception antenna 276 of which the polarization direction is rotated by 90 degrees relative to that of the transmission antenna 275.

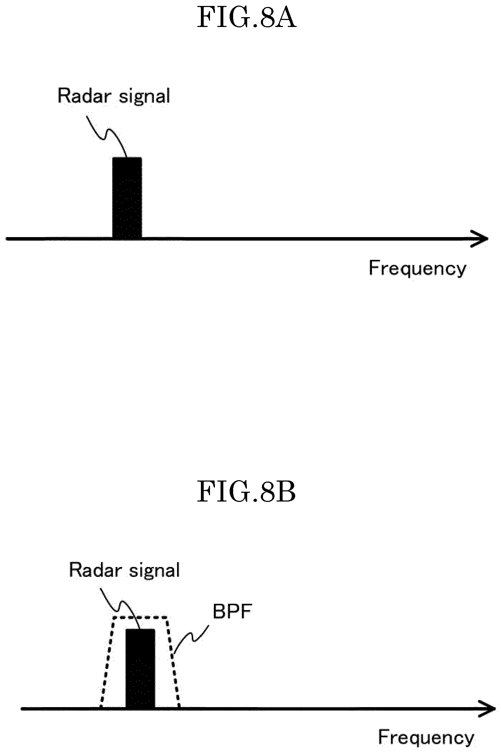

Next, the radar operation and the communication operation by means of the ground radio sets 250 are described in reference to FIGS. 8A through 9B. In the present system as described above, the configuration allows a communication signal and a radar signal to be transmitted in a frequency division manner.

Before the start of the communication operation (in the case where only the radar operation is carried out), the output from the transmitter 271 in the communication transmission/reception unit 270 is in such a state as shown in FIG. 8A. That is to say, only a radar signal is outputted from the transmitter 271. At this time, the input into the receiver 263 in the radar reception unit 260 (the output from the reception BPF 262) is in such a state as shown in FIG. 8B. The reception power that has been band limited by the reception BPF 262 (reception power of a radar signal) is observed from the receiver 263. The communication operation is started when it is determined that the thus observed reception power has exceeded the above-described threshold value (Th1 through Th3 in FIG. 4).

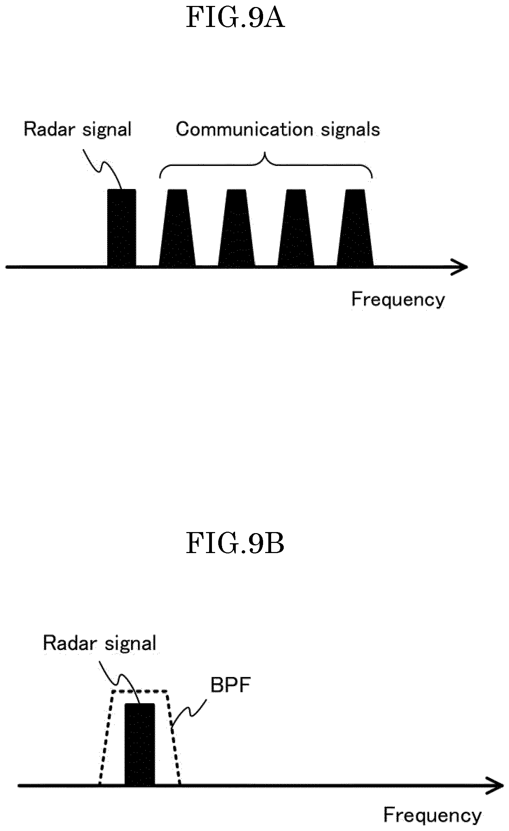

While the radar operation and the communication operation are being carried out, the output from the transmitter 271 in the communication transmission/reception unit 270 is in such a state as shown in FIG. 9A. That is to say, a communication signal is arranged in a frequency that is different from the frequency in which a radar signal is arranged. Though four channels are used for a communication signal in FIG. 9A, this is merely exemplary, and communication may be carried out by using a greater or smaller number of channels. These communication signals are inputted into the receiver with which the communication is carried out (receiver in the vehicle radio set 220). As a result, communication is established between stations that are to wirelessly communicate with each other (that is to say, between a ground radio set 250 and the vehicle radio set 220). At this time as well, a radar signal is continuously outputted from the transmitter 271 in the communication transmission/reception unit 270. Here, a radar signal is unnecessary in the receiver 272 in the communication transmission/reception unit 270, and therefore, an appropriate filter or the like may be used to block the radar signal component from passing through.

While the radar operation and the communication operation are being carried out, the input into the receiver 263 in the radar reception unit 260 (output from the reception BPF 262) is in such a state as shown in FIG. 9B. Not only a radar signal, but also a communication signal is outputted from the transmitter 271 in the communication transmission/reception unit 270 (FIG. 9A); however, the components other than the radar signal are band limited by the reception BPF 262, and therefore, only the reception power of the radar signal can be observed in the same manner as in FIG. 8A. The communication operation is stopped when it is determined that the thus observed reception power has lowered the above-described threshold value. That is to say, the output from the transmitter 271 in the communication transmission/reception unit 270 only includes a radar signal, and the output of the communication signal is stopped.

At this time, in the case where it is determined in another ground radio set that the reception power has exceeded the above-described threshold value (Th1 through Th3 in FIG. 4), the communication operation is started in this ground radio set. As described above in the present system, a communication signal and a radar signal are frequency divided, and thus, the two signals can be transmitted or received at the same time, which makes it possible for communication to be continued while switching ground radio sets to be communicable with the vehicle radio set as the train progresses.

In the above descriptions in terms of the relationship between two adjacent ground radio sets (250-1 and 250-2 or 250-2 and 250-3, for example), in the case where the reception level in one exceeds the threshold value, the reception level in the other lowers the threshold value; however, this is ideal, and it is difficult to set the threshold value to maintain such a relationship. Therefore, the threshold value may be set for two adjacent ground radio sets in such a manner that the state where the reception level in one exceeds the threshold value and the state where the reception level in the other exceeds the threshold value partially overlap. Thus, in the case where the ground radio set on the upstream side in the direction in which the train progresses (250-1, for example) is communicating with the vehicle radio set, the system may be controlled in such a manner that the ground radio set on the downstream side (250-2, for example) becomes a new ground radio set to communicate with the vehicle radio set in response to the event where the reception level in the ground radio set on the downstream side has exceeded the threshold value. Such a configuration makes it possible to prevent the communication from being deteriorated or disconnected when two adjacent ground radio sets are switched, and thus, it becomes possible to establish stable communication vis-a-vis the vehicle radio set.

Here, the ground radio set to communicate with the vehicle radio set may be selected in accordance with another method. As an example, a method for comparing the reception levels measured by the respective ground radio sets can be cited. That is to say, the system may be controlled in such a manner that in the case where a ground radio set on the upstream side in the direction in which the train progresses (250-1, for example) is communicating with the vehicle radio set, the ground radio set on the downstream side (250-2, for example) becomes a new ground radio set to communicate with the vehicle radio set in response to the event where the reception level of the ground radio set on the downstream side exceeds the reception level of the ground radio set on the upstream side.

In the above-described embodiment, such an example is shown where a ground radio set 250 transmits a radar signal even during the time when the ground radio set 250 transmits and receives a communication signal to and from the vehicle radio set 220; however, the transmission and reception of a radar signal by a ground radio set 250 may be stopped in the case where the transmission and reception of a communication signal by the ground radio set 250 has been started. In this case, the switching control device 280 turns off the transmission/reception function of a radar signal in a first ground radio set 250 where the transmission and reception of a communication signal have been turned on when the reception level of the reflected wave of a radar signal exceeds a threshold value. Meanwhile, the switching control device 280 keeps the transmission/reception function of a radar signal turned on in a second ground radio set 250, and controls the second ground radio set 250 so that the transmission and reception of a communication signal are turned on, and at the same time, the transmission and reception of a radar signal are turned off when the reception level of the reflected wave of a radar signal exceeds the threshold value in the second ground radio set 250. Then, the switching control device 280 carries out such a control that only the radar transmission/reception function is turned on in the first ground radio set 250 that has so far communicated with the vehicle radio set 220 (the transmission/reception function of a communication signal has so far been turned on). As a result, the ground radio sets 250 stop the transmission and reception of a radar signal during the time when the transmission/reception function of a communication signal is turned on, and therefore, the power consumption can be reduced, and at the same time, the risk of the radar signals between adjacent ground radio sets 250 interfering with each other can be reduced.

As described above, the wireless communication system in the present example is provided with: a plurality of ground radio sets 250 that are installed along a railway on which a train 200 runs and carry out the transmission/reception of a radar signal with a first frequency and the transmission/reception of a communication signal with a second frequency which is different from the first frequency; a vehicle radio set 220 that is equipped in the train 200 and carries out the transmission/reception of a communication signal with the second frequency; and a switching control device 280 that controls the switching of ground radio sets 250 that are to communicate with the vehicle radio set 220 on the basis of the reception level of a radar signal from the ground radio sets 250. In addition, the configuration allows the ground radio sets 250 that are not communicating with the vehicle radio set 220 to transmit a radar signal while not transmitting a communication signal, and allows the ground radio set 250 that has started communicating with the vehicle radio set 220 to transmit a radar signal and a communication signal at the same time.

Such a configuration makes it possible to specify the location of the train 200 solely within its own system without separately receiving moving body location information from an external system, and therefore, the system can be made simpler. In addition, during communication, the ground radio sets 250 can transmit and receive a communication signal and a radar signal at the same time by means of frequency division, and therefore, it is not necessary to stop the communication operation for the radar operation. As a result, it becomes possible to always grasp the location of the train 200 in order to select the ground radio set 250 that is appropriate to communicate with the vehicle radio set 220. In addition, the ground radio sets 250 in the present example are formed so that a radar signal and a communication signal can be outputted from one transmitter 271, and therefore, it is not necessary to provide separate transmitters for a radar and for communication, which allows a reduction in the cost for the device and can make the device more compact. Accordingly, a wireless communication system which makes it possible to efficiently carry out wireless communication with the train 200 can be provided.

Here, in the wireless communication system in the present example, the train 200 corresponds to the "moving body" in the present invention, the ground radio sets 250 correspond to the "base stations" in the present invention, the vehicle radio set 220 corresponds to the "mobile station" in the present inventions, and the switching control device 280 corresponds to the "switching control device" in the present invention.

Though the present invention is described above in detail on the basis of the embodiments, the present invention is not limited to the wireless communication system described herein, and needless to say can be widely applied to wireless communication systems other than those described above. The present invention can be applied to wireless communication systems where wireless communication is carried out vis-a-vis another moving body that runs along a predetermined route such as an automobile, a linear motor car, a monorail car, an airplane at an airport, and a vehicle that moves within an institution or on a premise.

In addition, it is possible to provide the present invention as a method or a system for implementing the process according to the present invention, a program for implementing such a method or a system, a recording medium for storing such a program or the like.

### INDUSTRIAL APPLICABILITY

The present invention can be applied to various wireless communication systems that carry out wireless communication with a moving body that runs along a predetermined route.

### REFERENCE SIGNS LIST

100: train
110: communication terminal
120: vehicle radio set
150-1 through 150-3: ground radio set
180: switching control device
190: communication terminal
200: train
210: communication terminal
220: vehicle radio set
250-1 through 250-3: ground radio set
251: radar signal processing unit
252: modulation/demodulation unit
260: radar reception unit
261: reception antenna
262: reception BPF
263: receiver
270: communication transmission/reception unit
271: transmitter
272: receiver
273: antenna-sharing device
274: transmission/reception antenna
275: transmission antenna
276: reception antenna
280: switching control device
290: communication terminal

## Claims

1. A wireless communication system for carrying out wireless communication with a moving body that runs along a predetermined route, comprising:
a plurality of base stations installed along the route that carry out transmission/reception of a radar signal with a first frequency and transmission/reception of a communication signal with a second frequency which is different from the first frequency;
a mobile station that is equipped in the moving body and carries out transmission/reception of a communication signal with the second frequency; and
a switching control device that controls the switching of base stations that are to communicate with the mobile station on the basis of the reception levels of a radar signal in the plurality of base stations,
wherein a base station that is not communicating with the mobile station transmits a radar signal while not transmitting a communication signal, whereas a base station that has started communicating with the mobile station transmits a radar signal and a communication signal at the same time.

2. The wireless communication system according to claim 1, wherein
in the case where the reception level of a radar signal in the base station that is adjacent to the base station that is communicating with the mobile station on the downstream side in the direction in which the moving body progresses exceeds a predetermined threshold value, the switching control device switches base stations so as to select the adjacent base station as a new base station to communicate with the mobile station.

3. The wireless communication system according to claim 1, wherein
in the case where the reception level of a radar signal in the base station that is adjacent to the base station that is communicating with the mobile station on the downstream side in the direction in which the moving body progresses exceeds the reception level of a radar signal in the base station that is communicating with the mobile station, the switching control device switches base stations so as to select the adjacent base station as a new base station to communicate with the mobile station.

4. The wireless communication system according to any of claims 1 through 3, wherein
each of the plurality of base stations has one or more antennas to be used for the transmission/reception of a radar signal and a communication signal, and the antennas are directed towards the upstream side in the direction in which the moving body progresses relative to the base station.

5. The wireless communication system according to any of claims 1 through 4, wherein
each of the plurality of base stations has a first antenna to be used for the transmission of a radar signal and the transmission/reception of a communication signal, and a second antenna to be used for the reception of a radar signal.

6. The wireless communication system according to any of claims 1 through 4, wherein
each of the plurality of base stations has a first antenna to be used for the transmission of a radar signal and the transmission of a communication signal, a second antenna to be used for the reception of a radar signal, and a third antenna to be used for the reception of a communication signal.

7. The wireless communication system according to claim 6, wherein
the second antenna is set in the same polarization direction as that of the first antenna, and
the third antenna is set in the polarization direction that is rotated by 90 degrees from the polarization direction of the first antenna.

8. A base station that is placed along a predetermined route along which a moving body runs and that can operate in conjunction with another base station placed along the route, wherein
the base station has a function of carrying out transmission/reception of a radar signal with a first frequency and a function of carrying out transmission/reception of a communication signal with a second frequency which is different from the first frequency,
the base station is switched whether or not to communicate with a mobile station that is equipped in the moving body on the basis of the reception level of a radar signal by the base station and the reception level of a radar signal by the other base station, and
in the case where the base station is not communicating with the mobile station, the base station transmits a radar signal while not transmitting a communication signal, and in the case where the base station has started communicating with the mobile station, the base station transmits a radar signal and a communication signal at the same time.

9. A wireless communication method that can be implemented between a mobile station that is equipped in a moving body which runs along a predetermined route and a plurality of base stations that is installed along the route, wherein
the plurality of base stations has a function of carrying out transmission/reception of a radar signal with a first frequency, and a function of carrying out transmission/reception of a communication signal with a second frequency which is different from the first frequency,
base stations that are to communicate with the mobile station are switched from one to another on the basis of the reception levels of a radar signal in the plurality of base stations, and
a base station that is not communicating with the mobile station transmits a radar signal while not transmitting a communication signal, and a base station that has started communicating with the mobile station transmits a radar signal and a communication signal at the same time.
